# EUROPEAN PATENT APPLICATION

(11) **EP 1 793 358 A2**
(43) Date of publication of application: **06.06.2007**
(21) Application number: 06290847.0
(22) Date of filing: 24.05.2006
(51) Int. Cl.: G08C 17/02

(54) **Remote control system and control method thereof**

(30) Priority: 05.12.2005 KR 20050117545
(71) Applicant: Samsung Gwangju Electronics Co., Ltd., Gwangju-city (KR)
(72) Inventor: Choi, Sam-hyun, Gwangsan-gu Gwangju-city (KR)
(74) Representative: Blot, Philippe Robert Emile

(57) **Abstract**

Disclosed is a control method of a wireless control system, which includes: standing by until a first wireless control signal is input, when power is supplied to the main body of the electronic appliance; storing a code included in the first wireless control signal as a reference code, when the first wireless control signal is input; observing whether a second wireless control signal, which is a new wireless control signal, is input; confirming whether a code included in the second wireless control signal matches the reference code; and e) when the code of the second wireless control signal matches the reference code, controlling the electronic appliance to operate according to the second wireless control signal and returning to the operation c), or when the code of the second wireless control signal does not match the reference code, directly returning to the operation c). Accordingly, it is possible to use a low-priced memory device instead of a high-priced memory device, and save manufacturing costs of the wireless control method.

## Description

### CROSS-REFERENCE TO RELATED APPLICATIONS

This application claims benefit under 35 U.S.C. § 119(a) of Korean Patent Application No. 2005-117545, filed December 5, 2005, in the Korean Intellectual Property Office, the entire contents of which are incorporated herein by reference.

### BACKGROUND OF THE INVENTION

### Field of the invention

The present invention relates to a remote control system. More particularly, the present invention relates to a remote control system and a control method thereof for remote controlling electronic appliances.

### Description of the Related Art

Generally, a remote control system for remote controlling electronic appliances includes a remote controlling unit outputting a wireless control signal and a signal receiving unit outputting a control signal to a controlling unit receiving the wireless control signal and controlling the electronic appliances. The remote controlling unit and the signal receiving unit use an optical signal or a RF (radio frequency) signal and connect to transmit and receive the signals with each other.

Disadvantageously, the remote controlling system using the optical signal remote can control the electronic appliances only when it has the remote controlling unit in a transmission range of the optical signal. Due to such a disadvantage, it is not easy to apply the remote control system using the optical signal to the electronic appliances such as a vacuum cleaner, because a user and a main body of the electronic appliances transmit and receive the signal with each other while moving.

The use of the RF signal offers a larger range of transmission and reception of the wireless control signal than the use of the optical signal, making user more convenient. However, when there are a plurality of electronic appliances applied with the remote controlling system inside a signal reception area of the same RF signal, the electronic appliances may interfere with each other. For example, they may respond a wireless control signal of other electronic appliances.

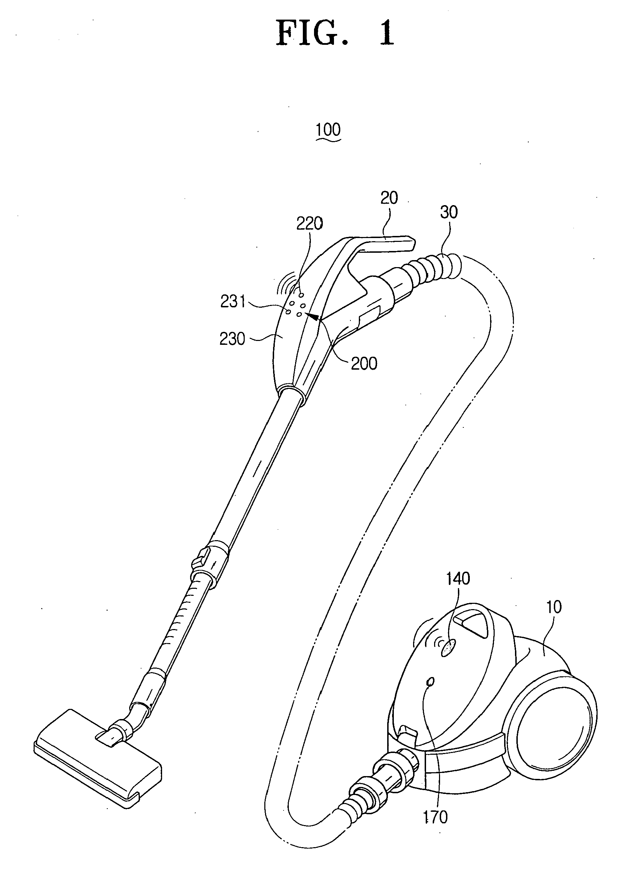

In order to solve at least the above problems and/or disadvantages, it is generally used to include code identifying the electronic appliances and the remote controller, in the wireless control signal received and transmitted by a pair of remote controlling units and electronic appliances. However, the above method should include a high-priced memory device such as EEPROM (electrically erasable and programmable read only memory) remembering the code for each remote controlling unit and electric appliances. When the remote control system is employed for the electric appliances in need of complicated remote controls, such as video/audio electric appliances, it is easier to apply the above remote control system, because what is only required is to simply add memory function of the code to the high-priced memory device for implementing complicate functions of the electronic appliances. However, if small electric appliances requiring a simple remote control function, such as a vacuum cleaner 100 (refer to FIG. 1), are applied with the above remote control system, there may be unnecessary manufacturing costs burdened.

### SUMMARY OF THE INVENTION

An aspect of the present invention is to solve at least the above problems and/or disadvantages of the related art and to provide at least the advantages described below. Accordingly, an aspect of the present invention is to provide a cheap and simple remote control system and a control method of the remote control system, which can remote control an electronic appliance while not causing interference between the electronic appliances.

In order to achieve the above aspects and/or other features of the present invention, a remote control system for remote controlling a main body of an electronic appliance, which includes: a remote controlling unit outputting a wireless control signal in response to an operation by a user; a signal receiving unit disposed at the main body of the electronic appliance and receiving the wireless control signal; a first micom controlling the main body of the electronic appliance according to the wireless control signal received at the signal receiving unit; and a first memory unit controlled by the first micom to automatically store a reference code contained in the first wireless control signal which is received at the signal receiving unit after the main body of the electronic appliance and the external utility power are connected with each other. After storing the reference code, the first micom controls the main body of the electronic appliance to operate according to the wireless control signal including a code matching the reference code.

Not using a high-priced memory device, it is possible to save manufacturing costs of the remote control system, and simplify product control.

The first memory unit comprises a RAM (random access memory) provided in the first micom, where a stored data is automatically deleted when the external utility power to the main body of the electronic appliance is cut off.

The remote control system may further include a reset key disposed at the main body of the electronic appliance, and outputting an operating signal to the first micom according to the operation by the user. When the operation signal is input from the reset key, the first micom deletes the reference code stored in the first memory unit and newly sets a reference code with a code which is included in the wireless control signal which is first input after the deletion.

The remote controlling unit includes an operation panel outputting the operation signal according to the operation by the user; a signal transmitting unit outputting the wireless control signal; a code generating unit generating a code each time power is re-supplied to the remote controlling unit after the power cut off; a second memory unit storing the code, and when a new code is generated according to the power re-supply to the remote controlling unit, storing the new code instead of the previously-stored code; and a second micom controlling such that when the operation signal is input, the wireless control signal corresponding to the operation signal and the code included in the wireless control signal are output.

The second memory unit and the code generating unit are integrally formed with the second micom.

The second memory unit comprises a RAM (random access memory) provided in the second micom, where a stored data is deleted when the external utility power to the main body of the electronic appliance is cut off, and the remote controlling unit and the main body of the electronic appliance are driven by separate powers, respectively.

According to one aspect of the present invention, a control method of a wireless control system which remote controls a main body of an electronic appliance is provided, which includes a) standing by until a first wireless control signal is input, when power is supplied to the main body of the electronic appliance; b) storing a code included in the first wireless control signal as a reference code, when the first wireless control signal is input; c) observing whether a second wireless control signal, which is a new wireless control signal, is input; d) confirming whether a code included in the second wireless control signal matches the reference code; and e) when the code of the second wireless control signal matches the reference code, controlling the electronic appliance to operate according to the second wireless control signal and returning to the operation c), or when the code of the second wireless control signal does not match the reference code, directly returning to the operation c).

In one embodiment of the present invention, the operation a) may be achieved after deleting the reference code when the power is supplied to the main body of the electronic appliance.

The control method further comprises: deleting the reference code and setting a code included in a new wireless control signal as a new reference code, when the request for setting a new reference code is input.

The request for setting a new reference code is made by operating a reset key provided at the main body of the electronic appliance.

The wireless control signal is a RF (radio frequency) signal.

### BRIEF DESCRIPTION OF THE DRAWING FIGURES

The above aspect and other features of the present invention will become more apparent by describing in detail exemplary embodiments thereof with reference to the attached drawing figures, wherein;

FIG. 1 is a perspective view of a vacuum cleaner according to an embodiment of the present invention;

FIG. 2 is a block diagram of a remote control system of the vacuum cleaner according to the embodiment of the present invention; and

FIGS. 3 and 4 are a flowchart of a method for driving the remote control system of the vacuum controller according to the embodiment of the present invention.

### DETAILED DESCRIPTION OF THE EXEMPLARY EMBODIMENTS

Hereinafter, an embodiment of the present invention will be described in detail with reference to the accompanying drawing figures.

In the following description, same drawing reference numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

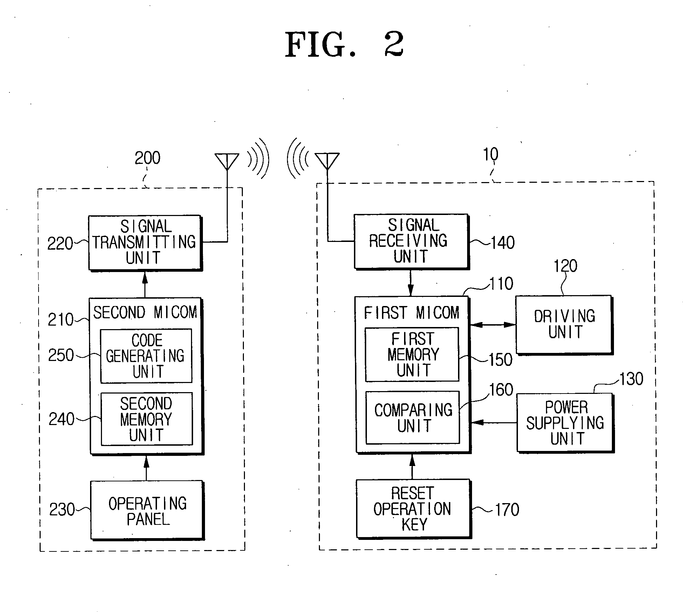

FIG. 1 shows one example of a vacuum cleaner 100 applied with a remote control system according to an embodiment of the present invention, and FIG. 2 is a structure of the remote control system according to the embodiment of the present invention. Referring to FIGS. 1 and 2, according to the embodiment of the present invention, the remote control system includes a remote controlling unit 200 outputting a wireless control signal under a user's operation, and a signal receiving unit 140 disposed at a main body of a vacuum cleaner to receive the wireless control signal.

According to the embodiment of the present invention, the remote controller 200 is formed at a handling unit 20 of the vacuum cleaner 100. The remote controlling unit 200 includes an operating panel 230, a signal transmitting unit 220, a second memory unit 240, a code generating unit 250 and a second micom 210.

The operating panel 230 includes a plurality of operating keys 231 where a user inputs an operating signal. The operating keys 231 are exposed externally of the handling unit 20 of the vacuum cleaner, making it easy to control the main body of the vacuum cleaner during using the vacuum cleaner 100, while grasping the handling unit 20.

When the operating signal is input, the signal transmitting unit 220 generates the wireless control signal and externally outputs the generated wireless control signal under control of the second micom 210. As abovementioned, the signal is externally output as a RF (radio frequency) signal, so the signal transmitting unit 220 is formed to be able to output the RF signal.

As abovementioned, the wireless control signal output from the remote controlling unit 200 includes code stored in the second memory unit 240. The code is for helping the main body of the vacuum cleaner to recognize the remote controlling unit 200. The code may be generated by arbitrary number input under operation of the operating key 231. According to the embodiment of the present invention, the code generating unit 250 generates the code. The code generating unit 250 is driven whenever power is supplied, and generates the code formed of the arbitrary numbers through random number-processing. If the power supply to the remote controlling unit 200 is stopped, the stored code is deleted. Immediately when the power is supplied to the remote controlling unit 200, the second memory unit 240 stores the code generated by the code generating unit 250. Data deletion of the second memory unit 240 may be controlled by the second micom 210 to correspond the power supply. According to the embodiment of the present invention, a memory device such as RAM (random access memory) is employed as the second memory unit 240. A code is deleted in the memory device such as RAM when power supply is off. Accordingly, there is no need of separate control for deleting the code. In the second memory unit 240, a low-priced RAM may replace a high-priced memory device such as EEPROM (electrically erasable and programmable read only memory) where the data is not lost when the power supply is off to the remote controlling unit 200, so that it is possible to prevent manufacturing costs of the remote controlling unit 200 from rising, to simplify driving control of the remote controlling unit 200.

As abovementioned, according to an embodiment of the present invention, the remote controlling unit 200 is supplied with the power only when a separate battery (not shown) is mounted, regardless of power supply to the main body 10 of the vacuum cleaner. This structure does not require a flexible hose 30 (refer to FIG. 1) mounted with a cable power-suppliably connecting the remote controlling unit 200 and the main body of the vacuum cleaner 10. Accordingly, manufacturing costs for the vacuum cleaner is saved, and the flexible hose is lighter, so that the user feel less tired for using the vacuum cleaner.

According to the embodiment of the present invention, the second memory unit 240 and the code generating unit 250 are embedded in the second micom 210. The remote controlling unit 200 is simpler structured and manufactured at lower costs.

The main body 10 of the vacuum cleaner is installed with the signal receiving unit 140 receiving the wireless control signal and a first micom 110. According to the embodiment of the present invention, the RF signal is used as the wireless control signal, so the signal receiving unit 140 receives the RF signal, like the signal transmitting unit 220 of the remote controlling unit 200.

According to the embodiment of the present invention, when inputting the wireless control signal, the first micom 110 confirms whether the input wireless control signal is output from the proper remote controlling unit 200, and controls various driving units 120 inside the main body 10 of the vacuum cleaner to be driven. In order to compare the above signals, the first micom 110 includes a comparing unit 160 and a first memory unit 150. The comparing unit 160 confirms whether the input memory unit 150 is proper, and the first memory unit 150 is stored with a reference code which is a comparison code of the comparing unit 160. When the wireless control signal is input into the signal receiving unit 140 from outside, the comparing unit 160 compares whether the code included in the input wireless control signal corresponds to the reference code. Only when the code and the reference code correspond, the first micom 110 controls the driving unit 120. When a power cord (not shown) of a power supplying unit 130 is connected with an external utility power, the first micom 110 is activated to make the main body of vacuum cleaner into a stand-by state. When the wireless control signal is input from the remote controlling unit 200, the first micom 110 controls the driving unit 120 to be supplied with the power. The abovementioned comparing unit 160 and the first memory unit 150 are embedded in the first micom 110, to save manufacturing costs of the vacuum cleaner. Just like the second memory unit 240, the first memory unit 150 may be the RAM where the data embedded therein is deleted, when the power supply is cut to the first memory unit 150. The low-priced RAM may replace the high-priced RAM such as the EEPROM, to curb rises in the manufacturing costs in the main body 10 of the vacuum cleaner.

A reset operation key 170 simply resets the reference code in case that the main body 10 of the vacuum cleaner is not properly controlled by input confusion of the wireless control signal. Towards this goal, the reset operation key 170 is disposed at the main body 10 of the vacuum cleaner to enable direct exchange of signal with the first micom 110, and outputs a resetting requesting signal to the first micom 110, in the user's operation.

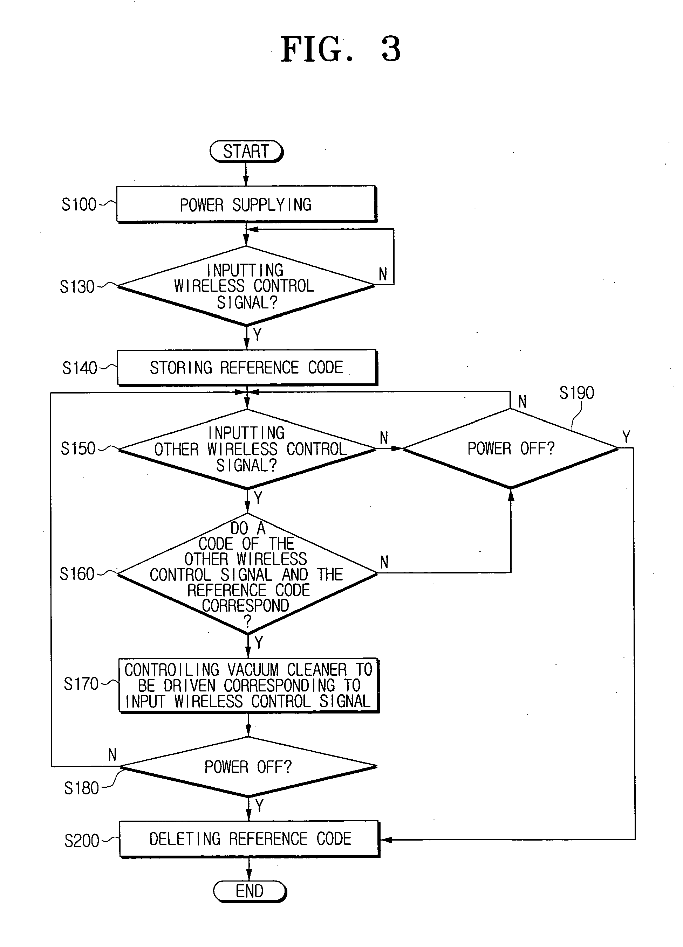

Hereinbelow, referring to FIGS. 2 and 3, according to the embodiment of the present invention, the operation of the remote control system of the electronic appliances will be described.

If a power is supplied through connection with the external utility power (S100), the first micom 110 is activated to make the main body of the vacuum cleaner 10 into a stand-by state. In this state, if a first wireless control signal is input from the remote controlling unit 200 (S 130) after the power is supplied, the first micom 110 extracts the code included in the first wireless control signal and stores the extracted code, as the reference code (S140) in the first memory unit is stored. As the abovementioned, if the reference code is set, it is observed whether the other wireless control signal which is a new wireless control signal, is input (S 150). In this state, if the other wireless control signal is input, it is confirmed whether the code of the other wireless control signal corresponds to the reference code (S160). If the code and the reference code correspond in the operation of S160, the driving of the main body 10 of the vacuum cleaner is controlled to correspond to the other wireless control signal. If the code and the reference code do not correspond, the input wireless control signal is ignored and the operation returns to S 150.

In this state, if the power is off (S180, S190), the reference code stored in the first memory unit is deleted (S200) and a process finishes. After that, if the main body of the vacuum cleaner 10 is newly supplied with power, the operation returns to S100. As abovementioned, if the first memory unit 150 is the RAM, the stored data is automatically deleted when the power is off (S 180, S190), and there is no need of separate process for deleting the existing code. For reference, immediately after the power is supplied, the reference code stored in the first memory unit is deleted and the operation of S 130 proceeds, if the first memory unit has the stored existing data not deleted even if the power supply is off. Due to the structure of the first memory unit, the manufacturing costs of the electronic appliances may rise, but the reference code may change each time when the power is supplied, so that it is possible to prevent the electronic appliances from interfering each other, through the simplified structure.

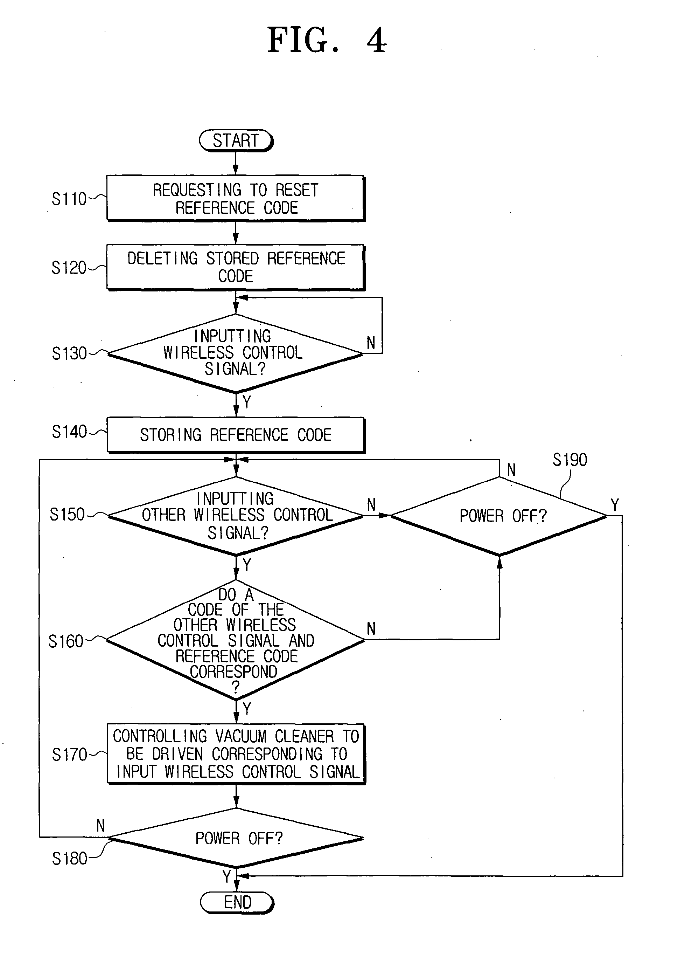

FIG. 4 is an operation of the remote control system operated by the reset operation key 170. The reset operation key 170 enables the user's operation when the reference code needs to be reset. If the power is supplied to the main body 10 of the vacuum cleaner, it is possible to operate. The following is a method for controlling the remote control system according to the operation of the reset operation key 170. If a command for resetting the reference code is input under the operation of the reset operation key 170 (S120), the reference code stored in the first memory unit 150 is deleted. A detailed description on the rest of process for the method for controlling the remote control system will be omitted, because it is the same as the method for resetting the reference code of FIG 3. It is possible to easily reset the reference code without separating the main body 10 of the vacuum cleaner and the external utility power.

According to the embodiment of the present invention, it is possible to use the remote control system without interference between the electronic appliances, so that it is easier to control the main body of the electronic appliances using the remote controlling unit.

The reference code setting is achieved not by the user's separate operation or separate driving process, but automatically according to the power supply of the electronic appliances. Accordingly, it is possible to simplify the driving process of the remote control system and save the manufacturing costs for the remote control system.

While the invention has been shown and described with reference to certain embodiments thereof, it will be understood by those skilled in the art that various changes in form and details may be made therein without departing from the spirit and scope of the invention as defined by the appended claims.

## Claims

1. A remote control system for remote controlling a main body of an electronic appliance, a wireless control system comprising:
a remote controlling unit outputting a wireless control signal in response to an operation by a user;
a signal receiving unit disposed at the main body of the electronic appliance and receiving the wireless control signal;
a first micom controlling the main body of the electronic appliance according to the wireless control signal received at the signal receiving unit; and
a first memory unit controlled by the first micom to automatically store a reference code contained in the first wireless control signal which is received at the signal receiving unit after the main body of the electronic appliance and the external utility power are connected with each other,
wherein after storing the reference code, the first micom controls the main body of the electronic appliance to operate according to the wireless control signal including a code matching the reference code.

2. The remote control system of claim 1, wherein the first memory unit comprises a RAM (random access memory) provided in the first micom, where a stored data is automatically deleted when the external utility power to the main body of the electronic appliance is cut off.

3. The remote control system of claim 1 or claim 2, further comprising:
a reset key disposed at the main body of the electronic appliance, and outputting an operating signal to the first micom according to the operation by the user,
wherein when the operation signal is input from the reset key, the first micom deletes the reference code stored in the first memory unit and newly sets a reference code with a code which is included in the wireless control signal which is first input after the deletion.

4. The remote control system of one of claims 1 to 3, wherein the remote controlling unit comprises:
an operation panel outputting the operation signal according to the operation by the user;
a signal transmitting unit outputting the wireless control signal;
a code generating unit generating a code each time power is re-supplied to the remote controlling unit after the power cut off;
a second memory unit storing the code, and when a new code is generated according to the power re-supply to the remote controlling unit, storing the new code instead of the previously-stored code; and
a second micom controlling such that when the operation signal is input, the wireless control signal corresponding to the operation signal and the code included in the wireless control signal are output.

5. The remote control system of claim 4, wherein the second memory unit comprises a RAM (random access memory) provided in the second micom, where a stored data is deleted when the external utility power to the main body of the electronic appliance is cut off, and
the remote controlling unit and the main body of the electronic appliance are driven by separate powers, respectively.

6. The remote control system of claim 4, wherein the second memory unit and the code generating unit are integrally formed with the second micom.

7. A control method of a wireless control system which remote controls a main body of an electronic appliance, the control method comprising:
a) standing by until a first wireless control signal is input, when power is supplied to the main body of the electronic appliance;
b) storing a code included in the first wireless control signal as a reference code, when the first wireless control signal is input;
c) observing whether a second wireless control signal, which is a new wireless control signal, is input;
d) confirming whether a code included in the second wireless control signal matches the reference code; and
e) when the code of the second wireless control signal matches the reference code, controlling the electronic appliance to operate according to the second wireless control signal and returning to the operation c), or when the code of the second wireless control signal does not match the reference code, directly returning to the operation c).

8. The control method of claim 7, wherein the reference code stored in the first memory unit is automatically deleted, when the power to the main body of the electronic appliance is cut off.

9. The control method of claim 7 or claim 8, further comprising:
deleting the reference code and setting a code included in a new wireless control signal as a new reference code, when the request for setting a new reference code is input.

10. The control method of claim 9, wherein the request for setting a new reference code is made by operating a reset key provided at the main body of the electronic appliance.

11. The control method of claim 9 or claim 10, wherein the wireless control signal is a RF (radio frequency) signal.
